# EUROPEAN PATENT SPECIFICATION

(11) **EP 2 339 165 B1**
(45) Date of publication and mention of the grant of the patent: **23.10.2013**
(21) Application number: 09015970.8
(22) Date of filing: 23.12.2009
(51) Int. Cl.: F02M 59/44, F02M 63/00

(54) **Purging method and system for preventing formation of deposits inside fuel pump**
Reinigungsverfahren und -system zur Vermeidung der Bildung von Ablagerungen im Innern einer Kraftstoffpumpe
Procédé de purge et système pour empêcher la formation de dépôts dans une pompe à carburant

(43) Date of publication of application: 29.06.2011
(73) Proprietor: Caterpillar Motoren GmbH & Co. KG, 24159 Kiel (DE)
(72) Inventor: Nagel, Jürgen, 24214 Gettorf (DE)
(74) Representative: Kramer - Barske - Schmidtchen

(56) References cited:
- EP-A1- 0 537 911
- GB-A- 415 008
- GB-A- 2 077 862
- GB-A- 2 129 883
- GB-A- 2 139 296

## Description

### Technical Field

The present disclosure generally refers to a fuel injection system for supplying fuel as, e.g., heavy fuel oil to injection nozzles of a large internal combustion engine. Furthermore, the present disclosure refers to a fuel injection pump as well as to a method for purging a fuel injection pump configured to pump fuel as, e.g., heavy fuel oil, of a large internal combustion engine.

In addition, the present disclosure refers to a high-pressure fuel pump for supplying fuel as, e.g., heavy fuel oil to a common rail of a fuel injection system, to a fuel pump and a method for purging a fuel pump configured to pump fuel as, e.g., heavy fuel oil, of a large internal combustion engine.

### Background

Generally, the term "large internal combustion engine" may refer to internal combustion engines which may be used as main or auxiliary engines of ships/vessels such as cruiser liners, cargo ships, container ships, and tankers, or in power plants for production of heat and/or electricity. In particular, large internal combustion engines may be configured to bum at least one fuel selected from the group consisting of Diesel, Marine Diesel Oil (MDO), and heavy fuel oil (HFO).

The terms "fuel injection pump" and "high-pressure fuel pump" as used herein may be replaced against each other. In other words: the presented characteristics of a fuel injection pump according to the present disclosure may also be provided in a high-pressure fuel pump which may be used to supply fuel like heavy fuel oil or the like at high pressure to a common rail.

Heavy fuel oil may contain "asphaltenes". Asphaltenes may be defined as molecular substances that are found in crude oil, along with resins, aromatic hydrocarbon, and alcane (i.e, saturated hydrocarbons). Asphaltenes may consist primarily of carbon, hydrogen, nitrogen, oxygen, and sulfur, as well as great amounts of vanadium and nickel. Heavy oils may contain much higher proportions of asphaltenes than of medium API graphic oil or light crude oils. For example, ISO 8217 Fuel Standard may describe various parameters of "heavy fuel oil", also referred to as "marine distillate fuels" or "marine residual fuels".

In addition, fuels like Diesel or MDO may contain contaminations like e.g. heavy fuel oil and/or other components as, e.g., zinc etc. These contaminations may generate deposits within the pump. In case of zinc, layers of zinc sulfate may develop.

Fuel injection pumps for supplying fuel as, e.g., heavy fuel oil to injection nozzles of large internal combustion engines are basically known. These pumps are configured to measure fuel as, e.g., heavy fuel oil into correct amounts of oil injection, building up a high pressure, and delivering it to the injection nozzles of the large internal combustion engines at the proper time. Such a fuel injection pump may include a pump barrel, the pump barrel extending along a longitudinal direction and having a barrel inner wall. A plunger may be configured to reciprocate within the pump barrel and guided by the barrel inner wall. A first groove may be formed in the barrel inner wall at a first position with respect to the longitudinal direction and covered by the plunger.

A fuel injection pump of the type described above is, e.g., known from GB 2 260 374 A. In this document, it is mentioned that it is known to provide in the wall of a bore a groove which is connected to a supply of lubricant under pressure, the groove being disposed intermediate a port or ports and the end of the bore from which the plunger extends. Since the plunger is reciprocating lubricant is picked up from the groove to provide lubrication of the working clearance between the plunger and the wall of the bore. Some lubricant were to flow out of the working clearance and will lubricate the working surfaces. However, fuel due to the high fuel pressure which is developed in the pumping chamber of the pump, will also flow along the working clearance and will mix with the lubricant in the groove and will flow onto the working surfaces. If the fuel is a light fuel such as is used in Diesel engines for vehicles, escape of fuel is not serious so far. As the lubrication of the various surfaces is concerned although desirable that the escape of fuel should be as small as possible since it deletes the engine lubricating oil. To this end it is known to provide a further groove intermediate the port or ports and the first mentioned groove, and to connect the further groove to the low pressure fuel source so that the maturity of the fuel is collected and returned to the source.

It is further mentioned that, if the fuel is a heavy fuel, for example of the type which requires to be heated before it is supplied to the pump (e.g. HFO), the leakage of fuel as described presents a number of problems. Firstly, the fuel will tend to accumulate in the grooves and the lubricating action as described would be impaired. Secondly, since the heavy fuel has blocked the intended flow of lubricant, the lubricant will due to the heat, tend to form a locker. Thirdly, the fuel oil in the event that the engine is stopped will tend to solidify making it difficult if not impossible for the means which controls the setting of the sleeve to function.

In the above-identified GB 2 260 374 A it is disclosed to provide a circumferential groove in the wall of the bore intermediate said port or ports and the end of the bore from which the plunger extends. A first passage is formed in the pump barrel and which in use, is connected to the source of lubricant under pressure and a second passage in the pump barrel is connected to the groove and through which a control flow of lubricant takes place in the use of the pump. Accordingly, the deposits which may be built up at the pump barrels may be removed by pumping Diesel fuel instead of heavy fuel oil with this fuel injection pump for the specific time period. Hence, purging cannot be conducted without stopping the normal heavy fuel oil supply.

EP 0 537 911 B1 refers to a very similar fuel injection pump. In EP 0 537 911 B1 it is mentioned that with pumps known from GB 2 260 374 A, it is a usual practice when stopping the engine to purge the pump of the heavy fuel by running it for a period of time on light fuel. This would avoid the possibility of the heavy fuel solidifying in the various passages within the pump and thereby preventing or hindering restarting of the engine without heating the pump, but with such a pump it would be necessary when changing over to the light fuel to provide the lubrication of the plunger. As a solution it is disclosed in EP 0 537 911 B1 to provide a passage which interconnects a first and second groove, and a pair of changeover valves for controlling liquid flow to and from the grooves respectively. The first one of said valves when in position connecting the associated groove to a drain and being in said one position when heavy fuel is being pumped by the pump and in its other position connecting the associated groove to a sort of lubricating oil under pressure and a second one of said valves when in one position connecting the associated groove to the drain and being in said one position when heavy fuel is being pumped by the pump and in its other position connecting the associated groove to a lubricating oil drain. The change over valves are in their said positions when light fuel is being pumped by the pump. The lubricating oil flows between the groove through the passage. Accordingly, the fuel injection pump known from EP 0 537 911 B1 may show the same problems as the fuel injection pump of GB 2 260 374 A.

Today hard coatings may often be used on pump plungers as a measure against wear and seizure of the plunger. These layers may have a very low surface roughness. Such coatings may normally not being used inside the barrel, hence layers will emerge mainly on the barrels surface, because of their higher surface roughness, which is a better bond for the deposit layers.

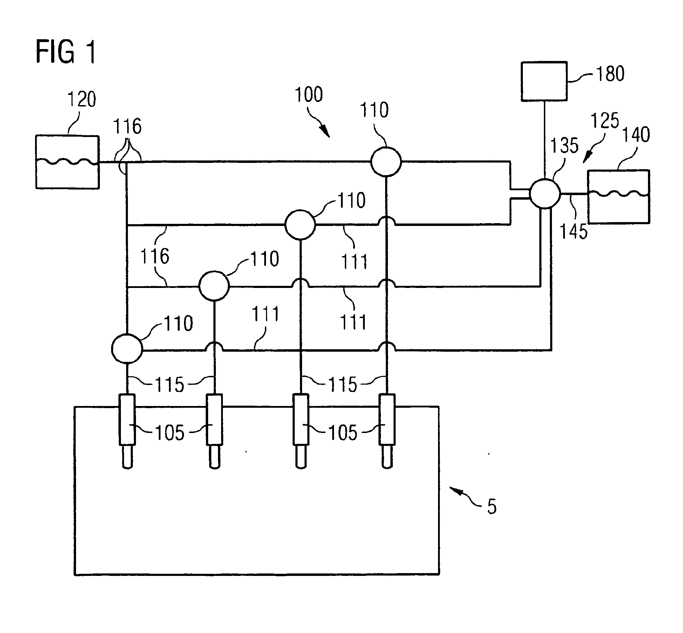

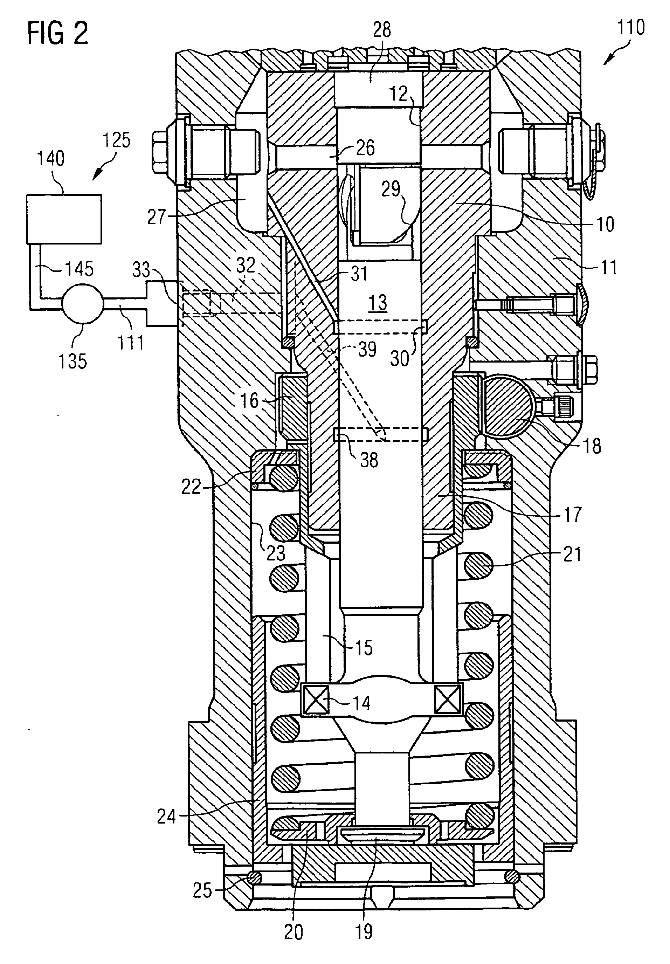

GB-A-2 139 296 A discloses in its Fig. 1 a fuel injection system with a groove formed in a barrel wall. The groove is supplied with oil under pressure, wherein hardly any oil creeps along the sliding surfaces of the plunger and the barrel to a further circumferential groove of the barrel, so that the oil in the groove remains motionless. As a result the temperature of the oil rises to that of the plunger and the barrel, which may render the lubricating oil unusable and may cause a breakdown of the injection, Fig. 2 discloses a fuel injection system, wherein the groove, which is supplied with oil from pump 8 is similar to the disclosure of GB 2260374 A part of a recirculating path, wherein an outlet duct exits from groove and is connected to a line, which is connected to the oil reservoir. By the oil continuously flowing through groove an overheating of the lubricating oil can be avoided.

GB-A-415 008 discloses a fuel pump including a lubricating system for the pistons (plungers) and the sleeves (barrels) of the pump. The sleeves each are provided with an internal lubricating groove, which communicates through a duct with an external groove. The grooves of all sleeves communicate with each other trough a further duct H. The further duct is supplied with lubricating oil under pressure and communicates with an inlet end of a fuel duct, whereby the lubricating oil, after having lubricated all the pistons, is supplied to the fuel and mixed with it.

GB-A-2 077 862 discloses a fuel pump with a plunger reciprocable within a cylinder. A pair of axially spaced grooves is formed in the wall of the cylinder and is connected by passages to a fuel inlet. A fuel outlet communicates with one end of the cylinder and ports communicate with the fuel inlet so that fuel can flow to the one end of the cylinder. The passage which communicates with the groove which is distant from the one end of the cylinder includes valve means so that communication of the groove with the inlet can be broken. This enables the plunger to be adequately lubricated when different types of fuel are used, both grooves being connected to the inlet when heavy fuel is being used.

The present disclosure is directed, at least in part, to improving or overcoming one or more aspects of prior systems.

### Summary of the Disclosure

In a first aspect of the present disclosure a fuel injection system for supplying fuel as, e.g., heavy fuel oil to injection nozzles of a large internal combustion engine is provided. A fuel injection pump may be configured to measure fuel as, e.g., heavy fuel oil into correct amounts for injection, building up a high pressure, and delivering it to the injection nozzles of the large combustion engine at the proper time. The fuel injection pump may include a pump barrel, wherein the pump barrel may extend along a longitudinal direction and may have a barrel wall. A plunger may be configured to reciprocate within the pump barrel and guided by the barrel wall, the plunger including a control edge. A first groove may be formed in the barrel wall at a first position with respect to the longitudinal direction and always covered by the reciprocating plunger. A second groove may be formed in the barrel wall at a second position in respect to the longitudinal direction and being connected to a chamber for draining or recirculating fluid, the second position being closer to the control edge than the first position. A purging system is connectable to the first groove. The purging system may be configured to supply the purging fluid through the first groove under a pressure such that the purging fluid distributes from the first groove through a minimum gap between the two contacting surfaces of the plunger and the barrel wall in an axial direction as to remove any deposits provided or developing in the gap between the pump barrel and the plunger. The plunger and the pump barrel are such that an area of the barrel wall between the first and second grooves comes into contact with the purging fluid supplied into the first groove.

In another aspect of the present disclosure there is provided a method for purging a fuel injection pump configured to pump fuel as, e.g. heavy fuel oil, of a large internal combustion engine within, e.g. a ship or generator set. The fuel injection pump includes a pump barrel, the pump barrel extending along a longitudinal direction and having a barrel wall, a plunger configured to reciprocate within the pump barrel and guided by the barrel wall, a first groove formed in the barrel wall at a first position with respect to the longitudinal direction and covered by the plunger, and a second groove formed in the barrel wall at a second position with respect to the longitudinal direction and being connected to a chamber for draining or recirculating fluid, the second position being closer to a control edge of the plunger than the first position. The method may comprise supplying a purging fluid to the first groove. The purging fluid may be supplied to the first groove at a pressure such that the purging fluid distributes from the first groove through a minimum gap between the two contacting surfaces of the plunger and the barrel wall in an axial direction as to remove any fuel deposits provided or developing in the gap between the pump barrel and the plunger. An area of the barrel wall between the first and the second grooves comes into contact with the purging fluid supplied into the first groove.

Other features and aspects of this disclosure will be apparent from the following description and the accompanying drawings.

In another aspect of the present disclosure a high-pressure fuel pump may be configured to be used in a fuel injection system of the type mentioned above. The fuel pump may be configured to supply fuel as, e.g., heavy fuel oil, building up a high pressure, and delivering it to a common rail of the large internal combustion engine. The fuel supply pump may comprise a pump barrel which may extend along a longitudinal direction and may have a barrel inner wall. A plunger may be configured to reciprocate within the pump barrel and is guided by the barrel inner wall. A first groove may be formed in the barrel inner wall at a first position with respect to the longitudinal direction and always covered by the reciprocating plunger. The first groove may be configured to be connected to a purging system configured to supply a purging fluid through the first groove.

In another aspect of the present disclosure a pump housing for a fuel supply pump is provided. The pump housing may comprise a pump barrel which extends along a longitudinal direction and may have a barrel inner wall and may be configured to guide a plunger reciprocating within the pump barrel. A first groove may be formed in the barrel inner wall at a first position with respect to the longitudinal direction and configured to be covered by the plunger. The first groove may be configured to connect to a purging system for supplying the purging fluid to the first groove.

In another aspect of the present disclosure a method for purging a fuel pump is provided. The method may comprise supplying a purging fluid to a first groove formed in a barrel inner wall at a first position with respect to the longitudinal direction and covered by a plunger configured to reciprocate within a pump barrel and guided by the barrel inner wall.

Other features and aspects of this disclosure will be apparent from the following description and the accompanying drawings.

### Brief Description of the Drawings

Fig. 1 shows a schematic block diagram of an exemplary embodiment of a fuel injection system of the present disclosure;

Fig. 2 shows a schematic sectional view of a fuel injection pump which may be adapted to be used in a fuel injection system shown in Fig. 1; and

Fig. 3 shows a piston and pump barrel adapted to be used in a fuel injection pump as, e.g., shown in Fig. 2.

### Detailed Description

Fig. 1 shows a schematic block diagram of an exemplary embodiment of a fuel injection system 100 configured to supply fuel as, e.g., heavy fuel oil to injection nozzles 105 of a large internal combustion engine 5. In accordance with this exemplary embodiment of fuel injection system 100 each injection nozzle 105 may be connected to an associated fuel injection pump 110 via a high-pressure fuel line 115. Alternatively, one fuel injection pump 110 may be configured to supply fuel as, e.g., heavy fuel oil to a plurality of fuel injection nozzles 110.

Each fuel injection pump 110 may be connected to a fuel reservoir 120 via fuel supply lines 116. Furthermore, each fuel injection pump 110 may be connected to a purging system 125 via purging fluid supply lines 111. In another exemplary embodiment of the present disclosure the arrangement shown in Fig. 1 may be amended such that only one high-pressure fuel pump instead of the plurality of pumps 110 is provided. The one high-pressure fuel pump may be connected to a common rail (not shown) which in turn may be connected to the nozzles 105.

Purging system 125 may comprise a common purging fluid pump 135. It is also contemplated that each fuel injection pump 110 may be connected to an associated, individual purging fluid pump 135. Purging fluid pump 135 may be connected via a purging fluid supply line 145 to a purging fluid reservoir 140. In addition, purging fluid pump 135 may be connected via a communication line to a control unit 180.

In Fig. 1 the basic structure of a fuel injection system according to one aspect of the present disclosure is shown. A alternate structure may comprise a common rail and one single fuel pump instead of a plurality of fuel injection pumps 110. Accordingly, in this alternate structure the fuel injection nozzles 105 may connect to the common rail and the fuel pump may supply the fuel at high-pressure to the common rail from which the high-pressure fuel is distributed to the individual injection nozzles 105.

In the following, further details of a fuel injection pump 110 are provided with reference to Fig. 2. Referring to Fig. 2, the pump may comprise a stepped pump barrel 10 which may be located within a housing 11. Formed in the barrel may be a bore in which is formed a reciprocable plunger 13. The plunger may extend from the end of the barrel 10 and may be provided with a pair of lateral pegs 14 which may be located in grooves 15 respectively formed in an extension of a control sleeve 16 which is mounted for angular movement about a cylindrical portion 17 of the barrel 10. The control sleeve 16 may be provided with teeth for engagement by a rack bar 18 in known manner. The plunger may have a foot 19 formed at its free end, the foot being engaged by a spring abutment 20 and this in turn is engaged by one end of a coiled compression spring 21 the opposite end of which may be in engagement with a flanged spring abutment 22 which may additionally serve to retain the sleeve 16 against axial movement.

The housing 11 may define a cylindrical guide surface 23 for a cup shaped tappet 24 which in use, may be driven inwardly by the action of an engine cam either directly or indirectly through a rocker mechanism. During inward movement of the tappet 24 the base wall thereof may engage with the foot 19 of the plunger 13 to impart inward movement of the plunger 13 against the action of the spring. The spring 21 may return the plunger 13 and also the tappet when so allowed by the cam.

In known manner there may be provided in the wall of the bore a pair of ports 26 which communicate with a fuel supply gallery 27 defined between the housing and the pump barrel 10. The ports 26 may be arranged to be covered by the plunger 13 after a predetermined inward movement and thereafter fuel will be expelled from the pumping chamber 28 defined in part by the end of the plunger and the wall of the bore to an associated engine. The plunger may also provided with a groove which is in communication with the pumping chamber 28, the groove having a helical control edge 29 which may uncover one of the ports 26 to the groove after a further inward movement of the plunger and when the port may be uncovered to the groove fuel may spill from the pumping chamber and may be returned to the supply gallery 27.The angular setting of the sleeve and plunger may determine the point during the inward movement of the plunger at which spill takes place and therefore the amount of fuel supplied to the associated engine.

Formed in the wall of the bore at a position intermediate the ports 26 and the end of the barrel 10 from which the plunger extends, may be a (second) circumferential groove 30. This groove 30 may communicate by way of a passage 31 in the barrel 10 with gallery 27. The groove 30 may be connected to the gallery 27 so that substantially all the fuel which may leak from the pumping chamber due to the high pressure therein in use of the pump 110, will be collected in the groove 30 and returned to the fuel supply gallery 27 via passage 31.

Dependent from the kind of fuel pumped within the fuel injection pump 110 deposits, e.g. in form of deposits or layers of hardened asphaltenes and/or zinc sulfite and/or zinc sulfate and/or calcium sulfate, may develop at the outer surface of plunger 13 and/or the barrel inner wall 12, e.g. within the area between ports 26 and cylindrical portion 17.

Another (first) groove 38 may be formed in the wall of the bore at a position below second groove 30, in particular at a position which may be located more far way from edge 29 than mentioned second groove 30. Groove 38 may be connected to an inlet 33 of purging system 125 via passages 32, 39.

One of the plurality of purging fluid supply lines 111 may be connected to passage 32. Accordingly, purging fluid reservoir 140 may be connected via supply line 145 and pump 135 to groove 38. Hence, groove 38 may be supplied with purging fluid so that purging fluid may be supplied continuously, frequently or on demand to groove 38. Consequently, the purging fluid may distribute from groove 38 into the minimum gap between the two contacting surfaces of plunger 13 and barrel bore, i.e. barrel inner wall 12, in direction to edge 29 and/or in direction to foot 19. The purging fluid may remove any deposits already provided or developing.

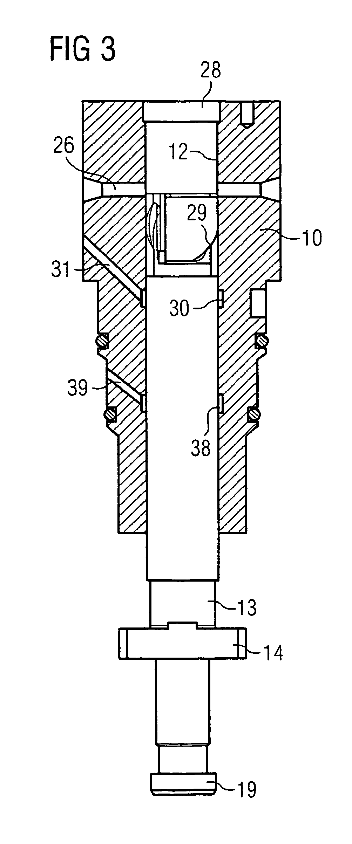

Referring to Fig. 3 a more schematic view of a similar piston 13 and barrel 10 as, e.g., to be used in a fuel injection pump 110 shown in Fig. 2, is shown.

In this exemplary embodiment of plunger 13 and pumping barrel 10 for a fuel injection pump 110 the area of barrel inner wall 12 between grooves 30, 38 and/or even a larger area between edge 29 and lower cylindrical portion of plunger 13 may come into contact with purging fluid supplied into groove 38. It may be effective to provide the possibility to supply groove 38 with a purging fluid, e.g. under pressure, for at least reducing or removing any deposits on plunger 13 and/or barrel inner wall 12.

### Industrial Applicability

Referring to Figs. 1-3 the basic operation of a fuel injection pump shown and how the purging method may be conducted will be explained. During pumping fuel, e.g., heavy fuel oil, MDO or Diesel, with a fuel injection pump 110 fuel may leak in the gap between barrel inner wall 12 and the outer surface of plunger 13. This fuel may result in formation of deposits on plunger 13 and/or barrel inner wall 12. The reason is that heavy fuel oil (HFO) may contain calcium, phosphorous, zinc, and sulfur. Consequently, also zinc sulphates and/or zinc sulfites and/or calcium sulphates may build up. In addition, high asphaltenes contents in heavy fuel may also produce deposits within the fuel injection pump, in particular, on a plunger outer surface or barrel inner wall 12. In case that MDO or Diesel contaminated with zinc or HDO will be pumped, zinc sulfate or other deposits may develop.

It may be possible to supply purging fluid by means of purging fluid pump 135 via lines 111 to fuel injection pumps 110. That is possible, if control unit 180 controls the one or more pumps 110. During operation of purging fluid pump 135 purging fluid sucked from purging fluid reservoir 140 may be supplied, e.g. at an appropriate, even high pressure, into groove 38 via inlet 33, passage 32 and passage 39. Supply of purging fluid, e.g. at high pressure (e.g. 10-70 bar, in particular 40-60 bar, more particularly 50 bar) into groove 38 may be conducted in a frequent manner, continuously, or on demand. As purging fluid diesel fuel, diesel fuel with an appropriate additive, marine diesel oil, marine diesel oil with an appropriate additive or fuel containing an appropriate additive may be used.

An appropriate additive may be distributed by Caterpillar Inc. under "Caterpillar fuel additive" or "Caterpillar fuel conditioner". Other appropriate additives are also available from other manufactures and suppliers. The term "additive" as used herein may be replaced yb the term "conditioner", in particular "fuel conditioner".

It should be noted that the term "purging" as used herein may be replaced by the term "cleaning". Irrespective of whether term is used herein the present disclosure may serve to avoid or reduce development of deposits or layers within a pump at the plunger and/or the barrel inner wall, or to reduce or eliminate deposits or layers already built up within the pump at the plunger and/or the barrel inner wall.

Although the preferred embodiments of this invention have been described herein, improvements and modifications may be incorporated without departing from the scope of the following claims. Examples of such modifications and improvements may be disclosed in the above description and/or in the attached claims.

## Claims

1. A fuel injection system (100) configured to supply fuel as, e.g., heavy fuel oil to injection nozzles (105) of a large internal combustion engine (5), comprising:
a fuel pump (110) configured to measure fuel as, e.g., heavy fuel oil into correct amounts for injection, building up a high pressure, and delivering it to at least one injection nozzle (110) of the large internal combustion engine (5) at the proper time, the fuel injection pump (110) including:
a pump barrel (10) extending along a longitudinal direction and having a barrel wall (12);
a plunger (13) configured to reciprocate within the pump barrel (10) and guided by the barrel wall (12), the plunger including a control edge; and
a first groove (38) formed in the barrel wall (12) at a first position with respect to the longitudinal direction and always covered by the reciprocating plunger (13);
a second groove (30) formed in the barrel inner wall (12) at a second position in respect to the longitudinal direction and being connected to a chamber (27) for draining or recirculating fluid, the second position being closer to the control edge than the first position; and
a purging system (125) connectable to the first groove (38), the purging system (125) being configured to supply a purging fluid through the first groove (38) under a pressure such that the purging fluid distributes from the first groove (38) through a minimum gap between the two contacting surfaces of the plunger (13) and the barrel wall (12) in an axial direction as to remove any fuel deposits provided or developing in the gap between the pump barrel (10) and the plunger (13), whereby the plunger (13) and the pump barrel (10) are such that an area of the barrel wall (12) between the first and second grooves (30,38) comes into contact with the purging fluid supplied into the first groove (38).

2. The fuel injection system of claim 1, wherein the purging system (125) includes:
a purging fluid reservoir (140) configured to store the purging fluid selected from the group consisting of Diesel fuel, Diesel fuel containing an additive, Marine Diesel Oil, Marine Diesel Oil containing an additive, and fuel containing an additive; and
a purging fluid pump (135) connected to the purging fluid reservoir (140) and to the first groove (38); the purging fluid pump (135) being configured to pump the purging fluid to the first groove (38).

3. The fuel injection system of claim 2, wherein the content of the additive is within the range of 0,2 vol. % to 3,0 vol. %.

4. The fuel injection system of any one of the preceding claims, further comprising:
at least one additional fuel injection pump (110), the additional fuel injection pump (110) being constructed identical to the first fuel injection pump (110);
wherein the purging system (125) is configured to supply the purging fluid through the first grooves (38) of the plurality of fluid injection pumps (110).

5. The fuel injection system of any of claims 1 to 4, wherein the fuel pump (110) is configured to supply fuel at high-pressure to a common rail.

6. A method for purging a fuel injection pump (110) configured to pump fuel as, e.g., heavy fuel oil, of a large internal combustion engine (5) within, e.g., a ship or generator set, wherein the fuel injection pump (110) includes a pump barrel (10), the pump barrel (10) extending along a longitudinal direction and having a barrel inner wall (12), a plunger (13) configured to reciprocate within the pump barrel (10) and guided by the barrel inner wall (12), a first groove (38) formed in the barrel inner wall (12) at a first position with respect to the longitudinal direction and covered by the plunger (13), and a second groove (30) formed in the barrel inner wall (12) at a second position with respect to the longitudinal direction and connected to a chamber for draining or recirculating fluid, the second position being closer to a control edge of the plunger (13) than the first position, the method comprising:
supplying a purging fluid to the first groove (38) at a pressure such that the purging fluid distributes from the first groove (38) through a minimum gap between the two contacting surfaces of the plunger (13) and the barrel wall (12) in an axial direction as to remove any fuel deposits provided or developing in the gap between the pump barrel (10) and the plunger (13), whereby an area of the barrel inner wall (12) between the first and second grooves (38,30) comes into contact with the purging fluid supplied into the first groove (38).

7. The method of claim 6, wherein:
the step of supplying the purging fluid includes supplying the purging fluid under pressure to the first groove (38); the pressure being in the range of 10 to 80 bar, in particular between 40-60 bar, more particular about 50 bar.

8. The method of claim 6 or 7, wherein:
the step of supplying the purging fluid includes supplying the purging fluid to the first groove (38) in a manner selected from the group consisting of continuously, on demand, and frequently.

9. The method of any one of claims 6 to 8, wherein the purging fluid is supplied to grooves (38) of a plurality of fuel injection pumps (110), each fuel injection pump including a pump barrel (10), the pump barrel (10) extending along a longitudinal direction and having a barrel inner wall (12), a plunger (13) configured to reciprocate within the pump barrel (12) and guided by the barrel inner wall (12), and a first groove (38) formed in the barrel inner wall (12) at a first position with respect to the longitudinal direction and covered by the plunger (13).

10. The method of any one of claims 6 to 9, wherein the purging fluid is selected from the group consisting of Diesel fuel, Diesel fuel containing an additive, Marine Diesel Oil, Marine Diesel Oil containing an additive, and fuel containing an additive.

## Patentansprüche

1. Kraftstoffeinspritzsystem (100), das zum Zuführen von Kraftstoff, wie beispielsweise Schweröl, zu Einspritzdüsen (105) einer großen Verbrennungskraftmaschine (5) ausgebildet ist, mit:
einer Kraftstoffpumpe (110), die dazu ausgebildet ist, Kraftstoff, wie beispielsweise Schweröl, in richtigen Mengen zur Einspritzung zu bemessen, einen Hochdruck aufzubauen und diesen zu wenigstens einer Einspritzdüse (110) der großen Verbrennungskraftmaschine (5) zum richtigen Zeitpunkt zuzuführen, wobei die Kraftstoffpumpe (110) aufweist:
ein Pumpengehäuse (10), das sich entlang einer Längsrichtung erstreckt und eine Gehäusewand (12) aufweist,
einen Kolben (13), der dazu ausgebildet ist, sich innerhalb des Pumpengehäuses (10) hin und her zu bewegen und von der Pumpenwand (12) geführt zu werden, wobei der Kolben eine Steuerkante aufweist, und
eine erste Nut (38), die in der Gehäusewand (12) an einer ersten Position bezüglich der Längsrichtung geformt ist und immer von dem sich hin und her bewegenden Kolben (13) abgedeckt wird,
eine zweite Nut (30), die in der Gehäuseinnenwand (12) an einer zweiten Position bezüglich der Längsrichtung geformt ist und mit einer Kammer (27) zum Auslassen oder Rezirkulieren von Fluid verbunden ist, wobei die zweite Position näher an der Steuerkante als die erste Position ist, und
einem mit der ersten Nut (38) verbindbaren Spülsystem (125), wobei das Spülsystem (125) dazu ausgebildet ist, ein Spülfluid durch die erste Nut (38) unter Druck zuzuführen, so dass sich das Spülfluid von der ersten Nut (38) durch einen minimalen Spalt zwischen den zwei Berührungsflächen des Kolbens (13) und der Gehäusewand (12) in einer axialen Richtung verteilt, um jegliche Kraftstoffablagerungen, die in dem Spalt zwischen dem Pumpengehäuse (10) und dem Kolben (13) vorhanden sind oder sich bilden, zu entfernen, wobei der Kolben (13) und das Pumpengehäuse (10) derart ausgebildet sind, dass ein Bereich der Gehäusewand (12) zwischen der ersten und zweiten Nut (30, 38) mit dem der ersten Nut (38) zugeführtes Spülfluid in Berührung gelangt.

2. Kraftstoffeinspritzsystem nach Anspruch 1, wobei das Spülsystem (125) aufweist:
ein Spülfluidreservoir (140), das dazu ausgebildet ist, das aus der Gruppe bestehend aus Dieselkraftstoff, Dieselkraftstoff mit einem Additiv, Marinedieselöl, Marinedieselöl mit einem Additiv und Kraftstoff mit einem Additiv ausgewählte Spülfluid zu speichern, und
einer Spülfluidpumpe (135), die mit dem Spülfluidreservoir (140) und der ersten Nut (38) verbunden ist, wobei die Spülfluidpumpe (135) dazu ausgebildet ist, das Spülfluid in die erste Nut (38) zu pumpen.

3. Kraftstoffeinspritzsystem nach Anspruch 2, wobei der Inhalt des Additivs innerhalb des Bereichs von 0,2 Vol.-% bis 3,0 Vol.-% liegt.

4. Kraftstoffeinspritzsystem nach einem der vorhergehenden Ansprüche, ferner mit:
wenigstens einer zusätzlichen Kraftstoffeinspritzpumpe (110), wobei die zusätzliche Kraftstoffeinspritzpumpe (110) identisch zu der ersten Kraftstoffeinspritzpumpe (110) ausgebildet ist,
wobei das Spülsystem (125) dazu ausgebildet ist, das Spülfluid durch die erste Nut (38) der mehreren Fluideinspritzpumpen (110) zuzuführen.

5. Kraftstoffeinspritzsystem nach einem der Ansprüche 1 bis 4, wobei die Kraftstoffpumpe (110) dazu ausgebildet ist, Kraftstoff in ein Common-Rail unter Hochdruck zuzuführen.

6. Verfahren zum Spülen einer Kraftstoffeinspritzpumpe (110), die dazu ausgebildet ist, Kraftstoff, wie beispielsweise Schweröl, einer großen Verbrennungskraftmaschine (5) innerhalb von beispielsweise einem Schiff oder einem Generatorsatz zu pumpen, wobei die Kraftstoffeinspritzpumpe (110) ein Pumpengehäuse (10), wobei sich das Pumpengehäuse (10) entlang einer Längsrichtung erstreckt und eine Gehäuseinnenwand (12) aufweist, einen Kolben (13), der dazu ausgebildet ist, sich innerhalb des Pumpengehäuses (10) hin und her zu bewegen und von der Gehäuseinnenwand (12) geführt zu werden, eine erste Nut (38), die in der Gehäuseinnenwand (12) an einer ersten Position bezüglich der Längsrichtung geformt ist und von dem Kolben (13) abgedeckt wird, und eine zweite Nut (30), die in der Gehäuseinnenwand (12) an einer zweiten Position bezüglich der Längsrichtung geformt ist und mit einer Kammer zum Auslassen oder Rezirkulieren von Fluid verbunden ist, aufweist, wobei die zweite Position näher an einer Steuerkante des Kolbens (13) als die erste Position ist, wobei das Verfahren aufweist:
Zuführen eines Spülfluids in die erste Nut (38) unter einem Druck, so dass sich das Spülfluid von der ersten Nut (38) durch einen minimalen Spalt zwischen den zwei Berührungsflächen des Kolbens (13) und der Gehäusewand (12) in einer axialen Richtung verteilt, um jegliche Kraftstoffablagerungen, die in dem Spalt zwischen dem Pumpengehäuse (10) und dem Kolben (13) vorhanden sind oder sich bilden, zu entfernen, wodurch ein Bereich der Gehäuseinnenwand (12) zwischen der ersten und zweiten Nut (38, 30) in Kontakt mit dem in die erste Nut (38) zugeführten Spülfluid gelangt.

7. Verfahren nach Anspruch 6, wobei:
der Schritt des Zuführens des Spülfluids ein Zuführen des Spülfluids in die erste Nut (38) unter Druck aufweist, wobei der Druck in einem Bereich von 10 bis 80 bar, insbesondere zwischen 40 bis 60 bar, besonders ungefähr 50 bar ist.

8. Verfahren nach Anspruch 6 oder 7, wobei
der Schritt des Zuführens des Spülfluids ein Zuführen des Spülfluids in die erste Nut (38) in einer Weise aufweist, die aus der Gruppe bestehend aus kontinuierlich, auf Anfrage und häufig ausgewählt ist.

9. Verfahren nach einem der Ansprüche 6 bis 8, wobei das Spülfluid in Nut (38) von mehreren Kraftstoffeinspritzpumpen (110) zugeführt wird, wobei jede Kraftstoffeinspritzpumpe ein Pumpengehäuse (10) aufweist, wobei sich das Pumpengehäuse (10) entlang einer Längsrichtung erstreckt und eine Gehäuseinnenwand (12), einen Kolben (13), der dazu ausgebildet ist, sich innerhalb des Pumpengehäuses (12) hin und her zu bewegen und von der Gehäuseinnenwand (12) geführt zu werden, und eine erste Nut (38) aufweist, die in der Gehäuseinnenwand (12) an einer ersten Position bezüglich der Längsrichtung geformt ist und von dem Kolben (13) abgedeckt wird.

10. Verfahren nach einem der Ansprüche 6 bis 9, wobei das Spülfluid aus der Gruppe bestehend aus Dieselkraftstoff, Dieselkraftstoff mit einem Additiv, Marinedieselkraftstoff, Marinedieselkraftstoff mit einem Additiv und Kraftstoff mit einem Additiv ausgewählt ist.

## Revendications

1. Système d'injection de carburant (100) configuré pour amener du carburant sous forme par exemple de mazout lourd, à des injecteurs (105) d'un grand moteur à combustion interne (5), comprenant:
une pompe à carburant (110) configurée pour mesurer le carburant sous forme par exemple de mazout lourd dans des quantités correctes pour l'injection, l'accumulation d'une haute pression et l'amenée de celui-ci à au moins un injecteur (110) du grand moteur à combustion interne (5) au moment convenable, la pompe d'injection (110) comprenant:
un cylindre de pompe (10) s'étendant sur une direction longitudinale, et ayant une paroi de cylindre (12);
un piston (13) configuré pour exécuter un mouvement de va-et-vient à l'intérieur du cylindre de pompe (10) et guidé par la paroi du cylindre (12), le piston comprenant un bord de contrôle; et
un premier sillon (38) formé dans la paroi de cylindre (12) à une première position par rapport à la direction longitudinale et toujours recouvert du piston à mouvement de va-et-vient (13);
un deuxième sillon (30) formé dans la paroi intérieure du cylindre (12) à une deuxième position par rapport à la direction longitudinale et étant raccordé à une chambre (27) pour drainer ou recycliser le fluide, la deuxième position étant plus proche du bord de contrôle que la première position; et
un système de purge (125) pouvant être raccordé au premier sillon (38), le système de purge (125) étant configuré pour amener un liquide de purge par le premier sillon (38) sous une pression telle que le liquide de purge se distribue depuis le premier sillon (38) par un trou minimal entre les deux surfaces de contact du piston (13) et la paroi de cylindre (12) dans une direction axiale de manière à éliminer tout dépôt de carburant prévu ou naissant dans le trou entre le cylindre de pompe (10) et le piston (13), ce qui fait que le piston (13) et le cylindre de pompe (10) sont tels qu'une zone de la paroi de cylindre (12) entre le premier et le deuxième sillon (30,38) entre en contact avec le liquide de purge amené dans le premier sillon (38).

2. Système d'injection de carburant selon la revendication 1, dans lequel le système de purge (125) comprend:
un réservoir de liquide de purge (140) configuré pour stocker le liquide de purge sélectionné parmi le groupe composé des suivants: carburant diésel, carburant diésel contenant un additif, diésel-navire, diésel-navire contenant un additif et carburant contenant un additif; et
une pompe de liquide de purge (135) raccordée au réservoir de liquide de purge (140) et au premier sillon (38); la pompe de liquide de purge (135) étant configurée pour pomper le liquide de purge au premier sillon (38).

3. Système d'injection de carburant selon la revendication 2, dans lequel la teneur en additif se situe dans l'intervalle entre 0,2% en volume et 3,0% en volume.

4. Système d'injection de carburant selon l'une quelconque des revendications précédentes, comprenant en outre:
au moins une pompe d'injection de carburant supplémentaire (110), la pompe d'injection de carburant (110) supplémentaire étant d'une exécution identique à la première pompe d'injection de carburant (110);
dans lequel le système de purge (125) est configuré pour amener le liquide de purge par les premiers sillons (38) de la pluralité de pompes d'injection de liquide (110).

5. Système d'injection de carburant selon l'une quelconque des revendications 1 à 4, dans lequel la pompe à carburant (110) est configurée pour amener le carburant sous haute pression à un rail commun.

6. Procédé pour purger une pompe d'injection de carburant (110) configurée pour pomper du carburant sous forme par exemple de mazout lourd, d'un grand moteur à combustion interne (5) à l'intérieur par exemple d'un navire ou d'un groupe turbine-alternateur, dans lequel la pompe d'injection de carburant (110) comprend un cylindre de pompe (10), le cylindre de pompe (10) s'étendant sur une direction longitudinale et présentant une paroi intérieure de cylindre (12), un piston (13) configuré pour exécuter un mouvement de va-et-vient à l'intérieur du cylindre de pompe (10) et guidé par la paroi intérieure de cylindre (12), un premier sillon (38) formé dans la paroi intérieure de cylindre (12) à une première position par rapport à la direction longitudinale et recouvert par le piston (13) et un deuxième sillon (30) formé dans la paroi intérieure de cylindre (12) à une deuxième position par rapport à la direction longitudinale et raccordé à une chambre pour drainer ou recycliser le liquide, la deuxième position étant plus proche d'un bord de contrôle du piston (13) que la première position, le procédé comprenant:
l'amenée d'un liquide de purge au premier sillon (38) à une pression telle que le liquide de purge se distribue depuis le premier sillon (38) par un trou minimal entre les deux surfaces de contact du piston (13) et la paroi de cylindre (12) dans une direction axiale de manière à éliminer tout dépôt de carburant prévu ou naissant dans le trou entre le cylindre de pompe (10) et le piston (13), ce qui fait qu'une zone de la paroi intérieure de cylindre (12) entre le premier et le deuxième sillon (30,38) entre en contact avec le liquide de purge amené dans le premier sillon (38).

7. Procédé selon la revendication 6, dans lequel:
l'étape d'amenée du liquide de purge comprend l'amenée du liquide de purge sous pression au premier sillon (38); la pression étant située dans l'intervalle compris entre 10 et 80 bars, en particulier entre 40 et 60 bars, plus particulièrement à environ 50 bars.

8. Procédé selon la revendication 6 ou 7, dans lequel:
l'étape d'amenée du liquide de purge comprend l'amenée du liquide de purge au premier sillon (38) dans un mode sélectionné parmi le groupe composé des suivants: en continu, à la demande et fréquemment.

9. Procédé selon l'une quelconque des revendications 6 à 8, dans lequel le liquide de purge est amené à des sillons (38) d'une pluralité de pompes d'injection de carburant (110), chaque pompe d'injection de carburant comprenant un cylindre de pompe (10), le cylindre de pompe (10) s'étendant sur une direction longitudinale et ayant une paroi intérieure de cylindre (12), un piston (13) configuré pour exécuter un mouvement de va-et-vient à l'intérieur du cylindre de pompe (12) et guidé par la paroi intérieure de cylindre (12) et un premier sillon (38) formé dans la paroi intérieure de cylindre (12) à une première position par rapport à la direction longitudinale et recouvert par le piston (13).

10. Procédé selon l'une quelconque des revendications 6 à 9, dans lequel le liquide de purge est sélectionné parmi le groupe composé des suivants: carburant diésel, carburant diésel contenant un additif, diésel-navire, diésel-navire contenant un additif et carburant contenant un additif.
